(19)

**Europäisches Patentamt**
**European Patent Office**
**Office européen des brevets**

(11) **EP 1 430 359 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **02800075.0**

(22) Anmeldetag: **09.09.2002**

(51) Int Cl.:
**G02F 1/35** (2006.01)

(86) Internationale Anmeldenummer:
**PCT/EP2002/010090**

(87) Internationale Veröffentlichungsnummer:
**WO 2003/029892 (10.04.2003 Gazette 2003/15)**

(54) **VORRICHTUNG ZUR OPTISCHEN FREQUENZKONVERSION**

DEVICE FOR CONVERTING AN OPTICAL FREQUENCY

DISPOSITIF DE CONVERSION DE FREQUENCE OPTIQUE

(84) Benannte Vertragsstaaten:
**AT CH DE FR GB LI**

(30) Priorität: **26.09.2001 DE 10147362**

(43) Veröffentlichungstag der Anmeldung:
**23.06.2004 Patentblatt 2004/26**

(73) Patentinhaber: **Lumera Laser GmbH**
**67661 Kaiserslautern (DE)**

(72) Erfinder:
• **NEBEL, Achim**
  **67705 Trippstadt (DE)**
• **HENRICH, Bernhard**
  **67655 Kaiserslautern (DE)**

• **HERRMANN, Thomas**
  **67705 Stelzenberg (DE)**

(74) Vertreter: **Patentanwälte Lambsdorff & Lange**
**Dingolfinger Strasse 6**
**81673 München (DE)**

(56) Entgegenhaltungen:
EP-A1- 0 919 852     US-A- 5 047 668
US-A- 5 384 803     US-A- 5 852 620

• **SZABO G ET AL: "FREQUENCY CONVERSION OF ULTRASHORT PULSES" APPLIED PHYSICS B: LASERS AND OPTICS, SPRINGER INTERNATIONAL, BERLIN, DE, Bd. B58, Nr. 3, 1. März 1994 (1994-03-01), Seiten 237-241, XP000443047 ISSN: 0946-2171**

**Beschreibung**

Die Erfindung betrifft eine Vorrichtung zur optischen Frequenzkonversion gemäß dem Oberbegriff des Patentanspruches 1.

Die optisch nichtlineare Frequenzkonversion von Laserstrahlung ist ein bekanntes Verfahren, um aus Laserlicht der Frequenz ω Laserlicht mit einer anderen Frequenz zu erzeugen. Beispiele für die optisch nichtlineare Frequenzkonversion sind Dreiwellenmischprozesse wie Summenfrequenzmischung (SFM), Frequenzverdopplung (SHG), Differenzfrequenzerzeugung (DFG) und optisch parametrische Oszillation (OPO). Das Medium, in dem die Frequenzkonversion stattfindet, ist üblicherweise ein optisch nichtlinearer Kristall. Eine wichtige Kenngröße bei allen optisch nichtlinearen Prozessen ist die Umwandlungsrate (Effizienz). Die Umwandlungsrate gibt an, wie viel der in den optisch nichtlinearen Kristall eingestrahlten Strahlungsleistung durch den optisch nichtlinearen Prozess in die Strahlungsleistung der frequenzkonvertierten Strahlung umgewandelt wird. Erwünscht ist in der Regel eine möglichst hohe Umwandlungsrate. Um durch den optisch nichtlinearen Prozess eine hohe Umwandlungsrate zu erreichen, ist eine gute *räumliche* Überlappung der im nichtlinearen Medium wechselwirkenden Strahlen notwendig. Wenn die Laserstrahlung aus Uchtimpulsen besteht, wird die Umwandlungsrate außer vom räumlichen Überlapp auch vom *zeitlichen* Überlapp der wechselwirkenden Lichtimpulse beeinflußt. Nur wenn die Impulse zur gleichen Zeit den optisch nichtlinearen Kristall durchlaufen, findet eine optimale Welchselwirkung statt. Dieses ist insbesondere für ultrakurze Laserimpulse zu beachten. Ultrakurze Impulse sind Impulse mit einer Dauer von typisch kleiner 100 ps und vorzugsweise kleiner 10 ps. Die kurze Dauer dieser Impulse führt dazu, dass der zeitliche Überlapp der wechselwirkenden Impulse oft verringert wird, da beispielsweise nur ein Teil (z. B. die Vorderflanke) des Impulses des einen Strahls mit einem Teil (z. B. Rückflanke) des Impulses des anderen Strahls überlappt. Dadurch entsteht ein zeitlicher Überlapp, der geringer ist, als der zeitliche Überlapp, der sich ergibt, wenn die Impulsmaxima sich zur selben Zeit im Kristall an gleicher Stelle befinden und sich durch diesen mit gleicher Geschwindigkeit bewegen. Bei einem derartigen, vollständigen zeitlichen Überlapp der Impulse ist die Umwandlungsrate in der Regel maximal.

Eine zeitliche Verzögerung von Impulsen in einem optisch nichtlinearen Kristall ergibt sich durch die Abhängigkeit des Brechungsindex von der Wellenlänge (Dispersion). Durchlaufen zwei ultrakurze Impulse mit unterschiedlicher Wellenlänge ein dispersives Medium, so werden die Impulse zeitlich gegeneinander verschoben. Der für die Ausbreitungsgeschwindigkeit maßgebliche physikalische Parameter ist die Gruppengeschwindigkeit. Sie kann bei Kenntnis des Brechungsindex (n) und der Änderung des Brechungsindex mit der Wellenlänge ($\lambda$) berechnet werden. Die unterschiedlichen Gruppengeschwindigkeiten der Laserimpulse mit unterschiedlicher Wellenlänge und/oder Polarisation führen zu einer unterschiedlichen zeitlichen Verzögerung im Vergleich zur Ausbreitung im Vakuum und damit evtl. zu einem nicht optimalen zeitlichen Überlapp der Impulse im nichtlinearen Kristall, wodurch die nichtlineare Wechselwirkung zwischen den Impulsen reduziert und damit die Umwandlungsrate verringert wird. Zur Berechnung der zeitlichen Verzögerung von ultrakurzen Impulsen ist nicht die Berechnung der Verzögerung über den Unterschied in den optischen Wegen (n.L) maßgeblich, sondern es muß die Wegstrecke L, die mit der Gruppengeschwindigkeit $v_{gr}$ des Lichtimpulses durchlaufen wird, herangezogen werden. Die Gruppengeschwindigkeiten berechnen sich mit Hilfe der Dispersionsformeln über die Beziehung:

$$v_{gr,o} = \left( \frac{n_o}{c} - \frac{\lambda}{c} \frac{\partial n_o}{\partial \lambda} \right)^{-1}$$

für die ordentlichen Brechungsindizes und über die Gleichung

$$v_{gr,e} = \left( \frac{n_e(\theta)}{c} - \frac{\lambda}{c} n_e(\theta)^3 \left( \frac{\cos^2\theta}{n_o^3} \frac{\partial n_o}{\partial \lambda} + \frac{\sin^2\theta}{n_e^3} \frac{\partial n_e}{\partial \lambda} \right) \right)^{-1}$$

für die außerordentlichen Brechungsindizes. Dabei sind $n_o$ und $n_e$ die ordentlichen und außerordentlichen Brechungsindizes für die Wellenlänge $\lambda$, $n_e(\theta)$ ist der außerordentliche . Brechungsindex, der vom Winkel $\theta$ zwischen der optischen Achse des Kristalls und der Ausbreitungsrichtung der Laserstrahlung abhängt. Die Größen $\frac{\partial n_o}{\partial \lambda}$ und $\frac{\partial n_e}{\partial \lambda}$ sind die Ableitungen des ordentlichen und des außerordentlichen Brechungsindex nach der Wellenlänge, c ist die Lichtgeschwindigkeit..

Bei der Frequenzkonversion muss für eine effiziente Erzeugung die Phasenanpassungsbedingung erfüllt werden. Die Phasenanpassungsbedingung entspricht der Impulserhaltung für den nichtlinearen Prozess. Die Phasenanpassungsbedingung kann beispielsweise in doppelbrechenden Kristallen erfüllt werden. Die Phasenanpassungs-bedingung ist $\Delta k=k_3-k_1-k_2=0$, d. h. die Wellenvektoren $k_1$ und $k_2$ der eingestrahlten Wellen und der Wellenvektor $k_3$ der erzeugten Welle müssen sich zu Null addieren.

In doppelbrechenden Kristallen ist der Brechungsindex und damit die Länge des Wellenvektors abhängig vom Winkel der Ausbreitungsrichtung des eingestrahlten Lichts zur optischen Achse. Durch Einstrahlen des Laserlichts mit einem geeignet eingestellten Winkel zur optischen Achse ist die Phasenanpassungsbedingung zu erfüllen. Im Allgemeinen wird durch das Einstrahlen des Laserlichts mit einem Winkel zur optischen Achse ein sogenannter walk-off erzeugt. Der walk-off ergibt sich durch den Unterschied in der Richtung des Wellenvektors k (als Normalen-Vektor auf den Wellenfronten) zu der Richtung des Energieflusses, die durch den Poyntingvektor beschrieben wird. Der walk-off Winkel ρ wird berechnet mit:

$$\rho = \pm\arctan\left[\left(\frac{n_o}{n_e}\right)^2 \cdot \tan\theta\right] \mp \theta$$

Das obere Vorzeichen in der Formel ist gültig für negative Kristalle, für die $n_o > n_e$ ist. Das untere Vorzeichen in der Formel ist gültig für positive Kristalle, für die $n_e > n_o$ ist. Mit negativ und positiven Kristallen sind hier nicht nur uniaxiale Kristalle gemeint. Ebenso ist die Formel gültig zur Berechnung des walk-off-Winkels bei biaxialen Kristallen, wenn die Ausbreitung in den Hauptebenen der biaxialen Kristalle erfolgt.

Für die optisch nichtlineare Frequenzkonversion werden üblicherweise optisch nichtlineare Kristalle mit Doppelbrechung verwendet. Eine weitere Klasse von optisch nichtlinearen Kristallen sind Kristalle mit Quasi-Phasenanpassung, bei denen die nichtlineare Suszeptibilität periodisch moduliert ist. In einem doppelbrechenden Kristall ist die Ausbreitungsgeschwindigkeit der Impulse von der Wellenlänge und der Polarisation der Strahlung abhängig. Auf diese Weise entstehen Laufzeitunterschiede zwischen Impulsen mit unterschiedlicher Potarisation selbst wenn sie die gleiche Wellenlänge besitzen.

Bei der Frequenzkonversion in nichtlinearen Kristallen mit ultrakurzen Laserimpulsen wird demnach im Allgemeinen durch den walk-off ein räumlicher und durch die Laufzeitunterschiede ein zeitlicher Versatz der Impulse entstehen, der zu einem nicht optimalen Überlapp der Impulse führt, so daß die Konversionseffizienz vermindert wird.

Eine Verbesserung des räumlichen und zeitlichen Überlapps ist daher für die Frequenzkonversion von essentieller Bedeutung. Daher ist es wichtig, durch ein geeignetes Verfahren den räumlichen walk-off und die Laufzeitunterschiede zu kompensieren um so gleichzeitig den räumlichen und den zeitlichen Überlapp zu verbessern.

Dieses ist besonders wichtig für nichtlineare Frequenzkonversionsprozesse, die aus mehreren hintereinander abfolgenden nichtlinearen Konversionsprozessen bestehen. Beispiele sind die Frequenzverdreifachung, bei der durch einen ersten nichtlinearen Kristall die frequenzverdoppelte Strahlung erzeugt wird und anschließend in einem zweiten nichtlinearen Kristall die dritte Harmonische als Summe aus-frequenzverdoppelter und fundamentaler Laserstrahlung erzeugt wird. Ein weiteres Beispiel ist die Erzeugung der fünften Harmonischen von Laserstrahlung, bei der zum Beispiel nach der Frequenzverdreifachung in einem weiteren nichtlinearen Kristall durch Summenfrequenzerzeugung der verdreifachten mit der frequenzverdoppelten Strahlung die fünfte Harmonische der fundamentalen Laserstrahlung erzeugt wird.

Für die Frequenzkonversion von zwei Laserstrahlen in einem optisch nichtlinearen Kristall, die jeder linear aber orthogonal zueinander polarisiert sind, durchläuft bei einer Frequenzkonversion mit Typ-II Phasenanpassung einer der beiden Strahlen den Kristall als ordentliche Welle und der andere Strahl den Kristall als außerordentliche Welle. Auf Grund der unterschiedlichen Brechungsindizes und Dispersion für ordentliche und außerordentliche Strahlung ist die Gruppengeschwindigkeit für beide Strahlen verschieden. Daraus resultiert ein zeitlicher Versatz der Impulse, der sich während des Durchlaufs durch den Kristall ändert. Zusätzlich führt der walk-off des außerordentlichen Strahls zu einem räumlichen Versatz des außerordentlichen Strahls relativ zum ordentlichen Strahl. Beides, die Laufzeitunterschiede und der walk-off führen in der Regel zur Verminderung der Konversionseffizienz.

**Zum Stand der Technik**

Aus der Literatur sind verschiedene Methoden zur Kompensation des räumlichen walk-off bei der Frequenzkonversion bekannt. In der Schrift US 5,047,668 ("Optical walk-off compensation in critically phase-matched three-wave frequency conversion systems", Bosenberg) wird ein Verfahren angegeben, in dem ein Paar von optisch nichtlinearen Kristallen zur Frequenzkonversion so angeordnet ist, dass die Orientierung ihrer optischen Achsen relativ zur Strahlachse umgekehrt ist. Dadurch wird die räumliche Trennung von ordentlichen und außerordentlichem Strahl durch den walk-off des außerordentlichen Strahls im ersten Kristall durch das äquivalente Zusammenlaufen beider Strahlen durch den walk-off im umgekehrt orientierten zweiten Kristall kompensiert. Daraus resultiert insgesamt ein verbesserter räumlicher Überlapp der Strahlen und damit eine höhere Konversionseffizienz. Dieses Verfahren hat mehrere Nachteile. Es sind zwei Kristalle notwendig, die beide zur Einhaltung der Phasenanpassungsbedingung in dem Winkel der optischen Achse zur Ausbreitungsrichtung der Laserstrahlung präzise kontrolliert werden müssen. Dieses ist eine Forderung, die in der Praxis nur mit hohem Aufwand zu realisieren ist, da die erforderliche Genauigkeit der Winkeleinstellung bei kritisch phasenangepassten Frequenzkonversionsprozessen typischerweise weniger als 0,1 Grad beträgt und zudem in der optimalen Konfiguration zwei Kristalle mit dieser Genauigkeit eingestellt werden müssen.

Weiterhin ist bei diesem Stand der Technik die Kompensation des räumlichen walk-off nicht vollständig. Zur weiteren Erhöhung des räumlichen Überlapps der beteiligten Strahlen müssten mehr als zwei gleichartige optisch nichtlineare Kristalle in periodisch abfolgender umgekehrter Orientierung angeordnet werden. Dieses ist in der Veröffentlichung "Increased Acceptance Bandwidths in Optical Frequency Conversion by Use of Multiple walk-offcompensating non-linear Crystals", A. V. Smith et al., (J. Opt. Soc. Am. B, vol. 15, pp. 122-141, 1998) beschrieben. Die Praktikabilität einer derartigen Anordnung ist gering, da für sämtliche Kristalle die Phasenanpassungsbedingung eingehalten werden muss. Es ist also jeder einzelne Kristall in seiner räumlichen Lage präzise einzustellen und in dieser Position unabhängig von Einflüssen der Umgebung zu halten. Außerdem erhöhen sich in einer derartigen Anordnung die optischen Verluste selbst wenn auf den Facetten der Kristalle Antireflexionsbeschichtungen aufgebracht werden. Durch Reflexions- und Absorptionsverluste, kann bei einer Vielzahl von Kristallen die Effizienz im Vergleich zu einer Zwei-Kristall-Anordnung sogar verringert werden. Nachteilig ist darüber hinaus, dass die neu erzeugte Strahlung sämtliche Oberflächen durchlaufen muss. Insbesondere für die Erzeugung von ultraviolettem (UV) Licht mit hoher Leistung können sich Probleme hinsichtlich von Zerstörungen und damit der Lebensdauer der Oberflächen der nichtlinearen Kristalle ergeben. Die bekannten Verfahren des Einsatzes von Prismen oder prismenartig angeschrägten Kristallenden zur Trennung der UV-Strahlung von der restlichen Laserstrahlung und damit zur Vermeidung von uv-beständigen Antireflexionsschichten auf den Kristallfacetten sind hier nicht anwendbar. Ein weiterer gravierender Nachteil von Anordnungen aus $2^n$ Frequenzkonversi-onskristallen ($n \geq 1$) sind die erhöhten Kosten. Die Kosten von optisch nichtlinearen Kristallen sind vor allem die Kosten für die Bearbeitung und Beschichtung der Oberflächen, also für die optische Politur und die Andreflexbeschichtung der Ein- und Austrittsflächen.

In der Vorrichtung gemäß der genannten US5,047,668 (Bosenberg) findet kein Ausgleich statt für Laufzeitunterschiede, die für gepulste Laserstrahlung entstehen. Die Kristalle sind so orientiert, dass die Phasenanpassungsbedingung für die Frequenzkonversion erfüllt wird. Für diese Kristallorientierung wird die Dispersion im Allgemeinen zu einem Unterschied der Gruppengeschwindigkeiten von zwei Impulsen mit unterschiedlicher Wellenlänge und/oder Polarisation führen, so dass es wegen der Laufzeitunterschiede der Impulse in den Kristallen zu einer geringeren Konversionseffizienz kommt. In der US5,047,668 (Bosenberg) ist keine Lehre enthalten, wie sich die Laufzeiten einstellen lassen um so Laufzeitunterschiede von Laserimpulsen gezielt zu beeinflussen und zu kompensieren.

In der EP0503875A2 ("Poynting vector walk-off compensation in type II phasematching", Nightingale) wird eine weitere Methode zur Kompensation des räumlichen walk-off in optisch nichtlinearen Kristallen offenbart. Der Winkel zwischen den Poynting-Vektoren der beteiligten Strahlen wird im Kristall dadurch kompensiert, dass die Strahlen nicht senkrecht zur Oberfläche in den Kristall eingestrahlt werden. Durch das Einstrahlen des Laserlichts unter einem Winkel werden die Strahlen an der Eingangsfacette des Kristalls gebrochen, die Richtung der Wellenvektoren also verändert Für kollineare Lichtsbahlen, die sich in der Polarisation und/oder in der Wellenlänge unterscheiden, ergibt sich dann ein Winkel zwischen den Wellenvektoren im Kristall, der bei geeigneter Wahl des Einfallswinkels und der Orientierung der Kristallachsen in Bezug auf die Elntrittsfacette des Kristalls den walk-off Winkel zwischen den Poynting-Vektoren gerade kompensiert. Die Kompensation des räumlichen walk-off findet hier über die gesamte Kristalliänge statt. Verteilhaft ist, dass nur ein optisch nichtlinearer Kristall verwendet werden muss. Auch dieses Verfahren hat jedoch Nachteile. Für einen bestimmten Frequenzkonversionsprozess müssen der Einstrahlwinkel und die Orientierung der optischen Achse des Kristalls speziell angepasst werden. Diese Winkel werden durch die Wellenlängen und die Polarisation der eingestrahlten Lichtstrahlen und der Brechzahlen des Kristalls für diese Lichtstrahlen bestimmt In der EP0503875A2. (Nightingale) ist dafür eine Berechnungsvorschrift angegeben. Es zeigt sich jedoch, dass diese Bedingung nicht immer erfüllbar ist. Insbesondere zur Kompensation von größeren walk-off-Winkeln muss der Kristall für die Lichtstrahlen eine große Doppelbrechung aufweisen, um einen Doppelbrechungswinkel realisieren zu können, der gleich dem walk-off Winket ist. Das Verfahren des nicht senkrechten Einstrahlens zur Kompensation des walk-off ist daher bevorzugt für kleine walk-off-Winkel geeignet. Für die Frequenzverdopplung in Typ-II phasenangepasstem KTP mit einem walk-off-Winkel von 0,2° gibt Nigthingale einen Einfallswinkel von 7,34° an. Schon für die Summenfrequenzmischung von 1064 nm Laserstrahlung mit frequenzverdoppelter 532 nm Strahlung in Typ-II phasenangepasstem LBO zur Erzeugung von UV-Strahlung mit einer Wellenlänge von 355 nm berechnet man für den entsprechenden watk-ofF Winkel von 0,5° einen Einfallswinkel, der diesen walk-off im Kristall kompensiert, von-27°. Ein weiterer Nachteil ist, dass für die Frequenzverdopplung mit diesem Verfahren die Kompensation des walk-offs nur in Kristallen mit Typ-II Phasenanpassung möglich ist. Nachteilig ist außerdem, dass durch das nicht senkrechte Einstrahlen die Strahlen in dem nichtlinearen Kristall eine Veränderung des Strahlquerschnitts erfahren. Die Strahlung wird astigmatisch, wodurch eine Reduzierung des gemeinsamen Überlapps eintritt. Zur Kompensation des Astigmatismus müssen die Strahlen vor dem Eintritt in den nichtlinearen Kristall geeignet geformt werden. Dazu stehen bekannte Verfahren wie die Verwendung von Zylinderoptiken oder sphärische Resonatorspiegel mit nicht senkrechtem Einfall zur Verfügung, die jedoch sämtlich einen erhöhten Aufwand bedeuten.

Da die Anordnung mit nicht senkrechtem Einfall nur den räumlichen walk-off kompensiert, werden Impulse mit unterschiedlicher Polarisation und/oder Wellenlänge während ihres Durchlaufs durch den optisch nichtlinearen Kristall zeitlich gegeneinander verschoben. Eine Kompensation von Laufzeitunterschieden ist nicht gegeben und kann durch das angegebene Verfahren, also durch das nicht senkrechte Einstrahlen in den Kristall auch nicht erreicht werden.

Anordnungen zur Erzeugung von höheren Harmonischen von Laserlicht mit verbessertem räumlichen Überlapp sind in den Schriften US5,835,513 ("Q-switched laser system providing UV light", Pieterse et.al.) und US5,848,079 ("Laser with frequency multiplication", Kortz - et.al.) offenbart. In beiden Schriften werden zwei optisch nichtlineare Kristalle hintereinander angeordnet. Der erste nichtlineare Kristall ist ein Kristall zur Erzeugung der zweiten Harmonischen, der zweite nichtlineare Kristall dient als Frequenzvervielfacher. Beiden Schriften ist gemeinsam, dass der erste nichtlineare Kristall (Frequenzverdopplerkristall) für kritische Phasenanpassung geschnitten ist. Damit entsteht in diesem nichtlinearen Kristall ein walk-off zwischen der fundamentalen Laserwelle und der zweiten Harmonischen. Der walk-off-Winkel ist in US5,848,079 (Kortz) mit 0,1° bis 6° angegeben. In der US5,835,513 (Pieterse) wird nicht ein Wert des walk-off-Winkels angegeben, sondern der Schnittwinkel des Frequenzverdopplerkristalls LBO, der zwischen 5° und 10° für den Kristallwinkel Phi und zwischen 85° und 90° für den Kristallwinkel Theta sein soll. Der Fachmann kann aus diesen Angaben den walk-off-Winkel berechnen.

Durch den walk-off in dem Frequenzverdopplerkristall werden die Strahlen der fundamentalen Laserwelle und der zweiten Harmonischen räumlich getrennt. Diese räumliche Trennung der Fundamentalen und der Harmonischen bewirkt bei geeigneter Anordnung des zweiten optisch nichtlinearen Kristalls in diesem einen verbesserten räumlichen Überlapp. Der verbesserte räumliche Überlapp führt zu einer Erhöhung der Konversionseffizienz für die Erzeugung der dritten Harmonischen in diesem zweiten nichtlinearen Kristall. Nachteilig an den Lehren der US 5,835,513 (Pieterse) und US 5,848,079 (Kortz) ist, dass für die Frequenzverdopplung mit Hilfe des ersten nichtlinearen Kristalls ein optisch nichtlinearer Kristall mit kritischer Phasenanpassung verwendet werden muss, da nur mit kritischer Phasenanpassung ein walk-off in diesem Frequenzverdoppler erzeugt werden kann. Die kritische Phasenanpassung hat jedoch den Nachteil, dass die Konversionseffizienz im Vergleich zu einer nichtkritischen Phasenanpassung ohne walk-off im Allgemeinen geringer ist. Die Frequenzverdopplung gemäß der US 5,835,513 (Pieterse) und der US 5,848,079 (Kortz) wird daher eine geringere Leistung der zweiten Harmonischen erzeugen, wodurch dann die Konversionseffizienz in dem zweiten nichtlinearen Kristall ebenfalls geringer ist. Ein weiterer Nachteil ist, dass die Kristalllängen des Frequenzverdopplers und des zweiten nichtlinearen Kristalls bei diesem Verfahren nicht unabhängig voneinander gewählt werden können, denn es bedarf einer bestimmten räumlichen Trennung zwischen Fundamentalwelle und der erzeugten zweiten Harmonischen nach dem Verdopplerkristall, die an den walk-off im zweiten nichtlinaren Kristall und dessen Länge angepasst sein muss. Die Kristalllänge des Verdopplerkristalls ist demnach so zu wählen, dass der walk-off im zweiten nichtlinearen Kristall gerade kompensiert wird. Nur dann wird sich ein wesen tlich verbesserter räumlicher Überlapp im zweiten nichtlinearen Kristall ergeben. Die Kristalllänge des Verdopplerkristalls ist dann aber nicht optimiert für die Frequenzverdopplung, so dass gegebenenfalls die Konversionseffizienz für die zweite Harmonische unbefriedigend ist. Zur Optimierung der Konversionseffizienz für die zweite Harmonische und für die erzeugte Summenfrequenz ist jedoch eine unabhängige Anpassung und damit Optimierung der Längen von beiden Kristallen erforderlich.

Gemäß den Vorrichtungen, die in der US 5,835,513 (Pieterse) und der US 5,848,079 (Kortz) beschrieben werden, werden Laufzeitunterschiede in den Kristallen für gepulste Laserstrahlung nicht gezielt beeinflusst. Die Kristalle werden nur danach ausgewählt, dass die Phasenanpassungsbedingung für die Frequenzkonversion erfüllt wird und der räumliche Überlapp der Strahlen in dem zweiten nichtlinearen Kristall durch den im ersten Kristall erzeugten walk-off verbessert wird. Bei den Kristallorientierungen, die für die Phasenanpassung im ersten und im zweiten Kristall einzustellen sind, wird die entsprechende Dispersion in der Regel zu einem Unterschied in der Gruppengeschwindigkeit für gepulste Strahlen führen, so dass wegen der damit verbundenen Laufzeitunterschiede der zeitliche Überlapp der Lichtimpulse in den Kristallen nicht optimal ist und damit die Konversionseffizienz verringert wird.

Die in den genannten Druckschriften beschriebenen Vorrichtungen haben gemeinsam, dass sich nur der walk-off verringert und so der räumliche Überlapp der Strahlen für eine effiziente Frequenzkonversion verbessert wird. Eine Lehre zur Kompensation von Laufzeitunterschieden oder der gezielten Änderung von zeitlichen Abständen zwischen Laserimpulsen, die zur Verbesserung des zeitlichen Überlapps und damit zur Erhöhung der Konversionseffizienz für gepulste Laserstrahlungen führt, ist nicht offenbart.

In der US 5,852,620 ("Tunable time plate", Chaozhi Wan) ist eine Anordnung beschrieben, mit der eine kontinuierliche zeitliche Verzögerung zwischen zwei gepulsten Laserstrahlen mit Piko- und Femtosekundendauer eingestellt werden kann. Diese besteht aus einem oder mehreren doppelbrechenden Kristallen, die drehbar abgestützt sind. Durch Drehen des Kristalls um eine bestimmte Achse wird der Einstrahlwinkel der Impulse relativ zur optischen Achse verändert. Damit werden die Brechzahl und die Dispersion verändert Dieses hat eine Änderung der Laufzeit der Impulse durch den Kristall zur Folge.

Die Druckschrift EP-A-0 919 852 offenbart eine Vorrichtung zur optischen Frequenzkonversion von zwei Laserstrahlen aus ultrakurzen Strahlungsimpulsen. Gemäß Fig. 12 ist in dem Strahlengang vor einem optisch nicht linearen Medium ein doppelbrechender Kristall angeordnet. Dabei ist die Länge des Kristalls so bemessen und dessen optische Kristallachse so eingestellt, dass die zwei Laserstrahlen sich räumlich an demselben Ort in dem optisch nicht linearen Medium treffen.

## Aufgabe:

Die der Erfindung zugrundeliegende Aufgabe, besteht darin, bei der optisch nichtlinearen Frequenzkonversion, bei der mindestens zwei gepulste Laserstrahlen in ein optisch nichtlineares Medium, insbesondere einen optisch nichtlinearen Kristall, eingestrahlt werden, die Konversionseffizienz mit einfachen Mitteln zu erhöhen. Diese Aufgabe wird durch die kennzeichnenden Merkmale des Patentanspruchs 1 gelöst.

Erfindungsgemäß wird zur Erhöhung der Konversionseffizienz von optisch nichtlinearen Konversionsprozessen, bei denen zwei gepulste Laserstrahlen in ein optisch nichtlineares Medium, wie z. B. einen Kristall, eingestrahlt werden, vor dieses optisch nichtlineare Medium ein doppelbrechender Kristall angeordnet. Dieser doppelbrechende Kristall, der im folgenden Kompensator genannt wird, hat die Eigenschaft sowohl den räumlichen als auch den zeitlichen Überlapp der Lichtimpulse, die in den nichtlinearen Kristall eingestrahlt werden in diesem zu verbessern. Dieses wird erreicht durch eine geeignete Orientierung der optischen Achse des Kompensators zur Ausbreitungsrichtung der Laser-Impulse und eine geeignete Kompensatorlänge. Mit dem Kompensator ist die Konversionseffizienz des optisch nichtlinearen Frequenzkonversionsprozesses größer im Vergleich zur Konversionseffizienz ohne Kompensator. Der erfindungsgemäße Kompensator gibt den Impulsen in beiden Laserstrahlen einen zeitlichen Versatz, so dass die Impulse beider Strahlen zeitgleich vorzugsweise in der Mitte des Frequenzkonversionsmediums (z.B. Kristall) ankommen. Der Kompensator muss in diesem Fall den zeitlichen Versatz der zwischen den Impulsen beim Durchlaufen der halben Länge des Frequenzkonversionmediums auf Grund der unterschiedlichen Gruppengeschwindigkeiten entsteht, ausgleichen und zusäzlich den zeitlichen Versatz der beiden Impulse ausgleichen, den diese ohne den erfindungsgemäßen Kompensator an der Eintrittsfacette des Frequenzkonversionsmediums haben. Der erfindungsgemäße Kompensator muss gleichzeitig die Eigenschaft besitzen, dass er die räumliche Trennung der Impulse durch den räumlichen-walk-off im Frequenzkonversionsmedium kompensiert. Dazu müssen die Lichtimpulse nach Durchlaufen des Kompensators räumlich um eine Strecke versetzt sein, die vorzugsweise der Hälfte des räumlichen Versatzes beider Strahlen nach Durchlaufen des Frequenzkonversionskristalls entspricht. Der Kompensator ist dabei so anzuordnen, dass die Richtung des räumlichen Versatzes im Kompensator gegenläufig ist zu der Richtung des räumlichen Versatzes im Frequenzkonversionskristall.

Die Berechnung der Länge des Kompensators und der Orientierung der optischen Achse des Kompensators zur Ausbreitungsrichtung der Laserstrahlen erfolgt durch die Berechnung der optischen Wege und der räumlichen Trennung der Laserimpulse, die als ordentlicher und außerordentlicher Strahl in den Kompensator eingestrahlt werden. Die Laufzeiten durch die Kristalle und den Kompensator werden über die Gruppengeschwindigkeiten der Lichtimpulse und die Laufwege mit Hilfe der Brechzahlen und Dispersionsdaten berechnet. Gleiches gilt für die Laufzeiten in allen optischen Elementen, die von den Strahlen durchlaufen werden. Die durch den walk-off bewirkte räumliche Trennung wird mit Hilfe der Brechzahlen und der Dispersionsdaten der durchlaufenen optisch-nichtlinearen Kristalle und des Kompensators berechnet. Der Kompensator wird also so ausgelegt, dass die in den Kompensator eingestrahlten Impulse diesen mit einem bestimmten räumlichen und zeitlichen Abstand verlassen. Der vorgegebene räumliche und zeitliche-Abstand ist gleichzeitig durch eine geeignete Wahl der Kristalllänge und der Orientierung der optischen Kristallachse zur Ausbreitungsrichtung der Laserstrahlen, einzustellen.

Der besondere Vorteil dieser bevorzugten Ausgestaltung der Erfindung liegt also darin, dass mit einem einzigen Element, dem Kompensator, gleichzeitig der zeitliche und räumliche Versatz der Lichtimpulse im nachfolgenden optisch-nichtlinearen Konversionskristall oder-Kristallen gezielt beeinflusst und hinsichtlich einer verbesserten Konversionseffizienz eingestellt werden kann.

Ein weiterer Vorteil der Erfindung ist die Tatsache, dass bei zwei hintereinander abfolgenden nichtlinearen Prozessen die Konversionseffizienz für beide Einzelprozesse getrennt optimiert werden kann, da der mögliche räumliche und zeitliche Versatz durch den ersten Konversionsprozess durch den Kompensator so beeinflusst werden kann, dass der resultierende räumliche und zeitliche Versatz für den zweiten Konversionsprozess eine verbesserte Effizienz liefert. Ein weiterer Vorteil ist, dass nur ein Kristall zur Kompensation benötigt wird. Dieser nimmt an dem optisch nichtlinearen Konversionsprozess selbst nicht teil und ist außerdem vor dem Konversionskristall positioniert. Dieses ist besonders vorteilhaft, wenn die Konversion im Konversionskristall kurzwellige Strahlung erzeugt. Der Kompensator, den die kurzwellige Strahlung nicht durchläuft, muss daher nur für die eingestrahlten Strahlen mit längeren Wellenlängen transparent sein. Dadurch ergibt sich eine größere Auswahl an Materialien für den Kompensator. Dieses ist auch in Bezug auf die Facetten des Kompensators, die von den Laserstrahlen durchlaufen werden, von Vorteil da die dort gegebenenfalls aufgebrachten Antireflexionsbeschichtungen ebenfalls nicht für die kurzwellige Strahlung ausgelegt sein müssen.

Die Freiheit in der Wahl des Materials für den Kompensator ist zudem groß, da der Kompensator selbst nicht am optisch nichtlinearen Prozess teilnimmt und damit keinerlei Einschränkungen hinsichtlich einer für eine Phasenanpassung erforderlichen Kristallorientierung unterliegt. Ein weiterer Vorteil ist, dass die Kompensation auch bei optisch nichtlinearen Prozessen mit großem räumlichen walk-off durchgeführt werden kann. Eine Einschränkung durch eine mögliche Brechung der Strahlen an den Oberflächen der Konversionskristalle und die damit verbundene Änderung der Ausbreitungsrichtung ist nicht gegeben.

Vorteilhaft ist weiter, dass der Kompensator nicht in Bereichen fokussierter Strahlung eingebracht werden muss, sondern eine Position gewählt werden kann, an der die Fleckgrößen der Strahlen vergleichsweise groß sind. Dadurch sind die Leistungsdichten hinreichend niedrig, so dass die Belastung des Kompensators durch die Laserstrahlung von der Bruchgrenze weit entfernt ist. Dieses mindert die Gefahr der Zerstörung des Kristalls durch hohe Laserleistungen.

Ein weiterer Vorteil ist die geringe Justierempfindlichkeit des Kompensators. Die Winkeleinstellung hat im Vergleich zu einem Kristall mit Phasenanpassung eine große Toleranz. Es bedarf deshalb nur einer einfachen Haltevorrichtung für den Kompensator, wodurch der apparative Aufwand entsprechend reduziert wird.

Vorteilhaft ist auch, dass die Strahlen auf die Facetten des Kompensators und des nachfolgenden nichtlinearen Kristalls senkrecht auffallen können. Dadurch wird der Astigmatismus vermieden, der sich bei nichtsenkrechtem Einfall ergibt. Somit sind Vorrichtungen zur Kompensation des Astigmatismus nicht notwendig, wodurch der apparative Aufwand entsprechend klein gehalten wird.

Die erfindungsgemäße Vorrichtung wird anhand der folgenden Ausführungsbeispiele erläutert. Es zeigt:

Figur 1: Eine nicht zur erfindung gehörige Vorrichtung für eine Frequenzverdopplung mit nichtkritischer Phasenanpassung und anschließender Frequenzverdreifachung mit Typ-II-Phasenanpassung;

Figur 2: eine nicht zur erfindung gehörige Vorrichtung für eine Frequenzverdopplung mit nichtkritischer Phasenanpassung und anschließender Frequenzverdreifachung mit erfindungsgemäßem Kompensator vor dem nichtlinearen Kristall für die Frequenzverdreifachung;

Figur 3: eine nicht zur erfindung gehörige Vorrichtung für eine Frequenzverdreifachung mit erfindungsgemäßem Kompensator und nichtlinearen Kristall für die Frequenzverdreifachung mit gekeilter Austrittsfacette;

Figur 4: eine erfindungsgemäße zurFrequenzkonversion mit geteiltem Kompensator;

Figur 5: eine nicht zur Erfindung gehörige Vorrichtung für eine Frequenzkonversion mit kritischer Phasenanpassung und anschließender Frequenzkonversion mit Typ-II-Phasenanpassung; und

Figur 6: eine nicht zur erfindung gehörige Vorrichtueg für eine Frequenzkonversion mit kritischer Phasenanpassung und erfindungsgemäßem Kompensator vor dem nichtlinearen Kristall für die Frequenzkonversion mit Typ-II-Phasenanpassung.

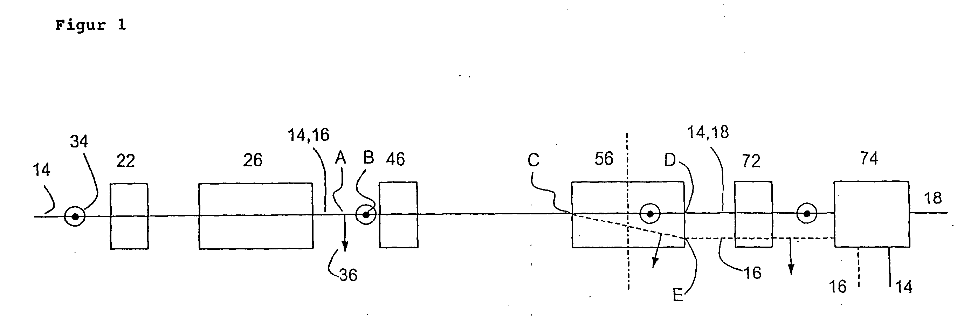

Die Figur 1 zeigt eine Anordnung wie sie zur Frequenzverdreifachung üblicherweise benutzt wird. Sie besteht aus einer Anordnung zur nichtkritischen Frequenzverdopplung und einer Anordnung zur Summenfrequenzmischung von fundamentaler und frequenzverdoppelter Strahlung. Diese Anordnung enthält einen Kristall (26) zur Frequenzverdopplung und einen Kristall (56) zur Frequenzverdreifachung. Die Laserstrahlung (14) hat eine lineare Polarisation (34). Mit Hilfe der optischen Einrichtung (22) wird die Laserstrahlung (14) in den Frequenzverdopplerkristall (26) eingestrahlt. Die Einstrahlung mit der optischen Einrichtung (22) erfolgt so, dass sich ein Fokus zur Erhöhung der Leistungsdichte der Laserstrahlung (14) im Kristall (26) ergibt. Die Polarisation der Laserstrahlung (14) ist linear, der Vektor des elektrischen Feldes ist senkrecht zur Ebene des Bildes (1). Den Frequenzverdopplerkristall (26) verlassen die nicht verdoppelte Strahlung (14) und die frequenzverdoppelte Strahlung (16). Die frequenzverdoppelte Strahlung (16) hat eine Polarisationsrichtung (36), die orthogonal zu der Polarisationsrichtung (34) der Laserstrahlung (14) ist. Wenn die Frequenzverdopplung mit Hilfe des Frequenzverdopplerkristalls (26) nichtkritisch ist, sind die Laserstrahlung (14) und die frequenzverdoppelte Strahlung (16) kollinear. Wegen der Dispersion im Kristall (26) sind die Gruppengeschwindigkeiten beider Strahlen im Kristall (26) unterschiedlich. Für gepulste Laserstrahlung entsteht dadurch ein zeitlicher Versatz zwischen den Impulsen der Laserstrahlung (14) und den Impulsen der frequenzverdoppelten Strahlung (16). Der zeitliche Versatz ist durch die Orte A und B charakterisiert. Der Impuls der Laserstrahlung ist zu einem gegebenen Zeitpunkt an dem Ort B, der zugehörige frequenzverdoppelte Impuls hingegen erst am Ort A. Die zeitliche Reihenfolge der Impulse kann auch umgekehrt sein, wenn die Dispersion des Frequenzverdopplerkristalls derart ist, dass die Gruppengeschwindigkeit der frequenzverdoppelten Strahlung (16) größer ist als die Gruppengeschwindigkeit der Strahlung (14). Wichtig ist nicht die Reihenfolge, sondern ein Unterschied der Gruppengeschwindigkeiten, für Laser- und frequenzverdoppelten Impuls, der zu einem zeitlichen Versatz $\Delta t$ der Impulse führt, so dass nach dem Frequenzverdopplerkristall die Impulse zu einer gegebenen Zeit nicht am gleichen Ort sind.

Mit Hilfe der optischen Einrichtung (46) werden die Laserimpulse (14) und die frequenzverdoppelten Impulse (16) in den Summenfrequenzmischkristall (56) zur Erzeugung der dritten Harmonischen eingestrahlt. Wegen des walk-off des frequenzverdoppelten Strahls verlässt dieser den Verdreifacherkristall am Ort E. Der Fundamentalstrahl, der keinen walk-off erfährt, verlässt den Verdreifacherkristall am Ort D. Die dritte Harmonische (18) verlässt den Verdreifacherkristall ebenfalls am Ort D. Der frequenzverdoppelte Strahl (16) läuft entlang der Strecke CE, der Fundamentalstrahl entlang CD. Die optische Einrichtung (72) bündelt und formt die Strahlung (18). Diese kann eine Linse, ein Linsensystem oder ein System aus reflektierender Optik sein. Mit Hilfe der Trenneinrichtung (74) werden die Strahlen (14), (16) und (18) getrennt. Dazu wird eine wellenlängenabhängige und/oder polarisationsabhängige Selektion der Strahlen mit bekannten optischen Elementen durchgeführt. Diese sind speziell beschichtete Spiegel, Prismen oder Polarisatoren. Eine Kombination dieser Elemente zur Strahltrennung ist ebenso möglich.

Die Gruppengeschwindigkeiten der Laserimpulse (14) und der Impulse der frequenzverdoppelten Strahlung (16) sind verschieden in dem nichtlinearen Kristall (26) und dem fokussierenden Element (46). Aus diesem Grunde erreichen die Impulse (14) und (16) den nichtlinearen Kristall (56) am Ort C der Facette zu unterschiedlichen Zeiten.

Auf Grund des walk-off zwischen den Strahlen (14) und (16) im Kristall (56) ist der räumliche Überlapp dieser Strahlen während des Kristalldurchgangs für in der Praxis gebräuchliche Strahldurchmesser und Kristalllängen auf einen Bruchteil der Kristalllänge beschränkt.

Durch den reduzierten zeitlichen und räumlichen Überlapp wird die Konversionseffizienz für die Erzeugung der dritten Harmonischen im Kristall (56) stark herabgesetzt.

Die Vorrichtung verbessert den zeitlichen und räumlichen Überlapp in wesentlichem Maße. Dadurch wird die Konversionseffizienz verbessert. Wie das nachfolgend beschriebene Ausführungsbeispiel zeigt, kann durch eine Vorrichtung die Konversionseffizienz mehr als verdoppelt werden.

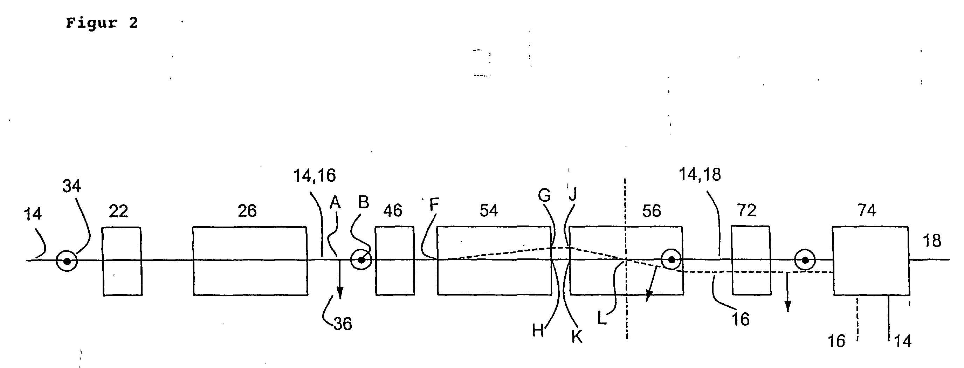

Die Vorrichtung soll anhand des Schemas der Figur 2 beschrieben werden.

In den Strahlengang zwischen Frequenzverdoppler (26) und Frequenzverdreifacher (56) wird erfindungsgemäß der Kompensator (54) eingebracht. Der Laserstrahl (14) läuft über den Weg F, H, K, L. Die frequenzverdoppelte Strahlung läuft über den Weg F, G, J, L. Beide Strahlen treffen sich vorzugsweise in der Mitte des Verdreifacherkristalls (56). Die Richtung des walk-off ist im Kompensator so eingestellt, dass er der Richtung des walk-off im Verdreifacherkristall entgegengesetzt ist. Dadurch wird der räumliche Überlapp im Verdreifacherkristall vergrößert.

Der räumliche Versatz HG zwischen Laser- und frequenzverdoppeltem Laserstrahl ist gegeben durch:

$$HG = \tan\left(\rho_{Komp}\right) \cdot L_{Komp}$$

Dabei ist $\rho_{Komp}$ der walk-off Winkel der außerordentlichen Strahlung im Kompensator und $L_{Komp}$ ist die Länge des Kompensators.

Dieser Versatz wird so eingestellt, dass die Strecke JK auf der Facette des Verdreifacherkristalls bevorzugt der halben Strecke DE (Abbildung 1) entspricht. Die Strecke HG ist gleich der Strecke JK, wenn die Facetten des Kompensators (54) und des Frequenzkonversionskristalls (56) senkrecht zur Laserstrahlrichtung sind. Zur Einstellung des Versatzes wird der walk-off im Kompensator und die Länge des Kompensatorkristalls geeignet gewählt. Der walk-off-Winkel wird bestimmt durch die Wahl der Ausbreitungsrichtung des Laserstrahls (14) relativ zur optischen Kristallachse des Kompensators (54).

Die Orientierung der optischen Achse des Kompensators und dessen Länge sind außerdem so gewählt, dass die Laufzeitunterschiede der Laserimpulse und der Impulse der frequenzverdoppelten Strahlung im Kristall 26 im fokussierenden Element (46) und im Verdreifacherkristall (56) (auf den Strecken KL und JL) kompensiert werden. Damit treffen die Impulse der Strahlen (14) und (16) zeitgleich am Ort L ein. Dazu muss die Gruppengeschwindigkeit der frequenzverdoppelten Impulse im Kompensator größer als die Gruppengeschwindigkeit der Impulse des Laserstrahls im Kompensator sein, da der frequenzverdoppelte Strahl einen längeren Laufweg hat und bereits durch die Frequenzverdopplung eine zeitliche Verzögerung gegenüber dem Laserstrahl erfahren hat.

Mit der Anordnung eines Kompensators vor dem Kristall (56) wird einerseits der Abstand KJ so eingestellt, dass sich die Strahlen räumlich am Punkt L treffen. Gleichzeitig wird der zeitliche Abstand der Impulse beider Strahlen so eingestellt, dass sie zeitgleich am Ort L eintreffen. Der Kompensator erzeugt also einen verbesserten räumlichen und zeitlichen Überlapp im Verdreifacherkristall.

Mit der Länge des Kompensators und der Orientierung von dessen Kristallachse zur Ausbreitungsrichtung der Laserstrahlen stehen zwei Parameter zur Verfügung, die so gewählt werden können, dass die genannten räumlichen und zeitlichen Bedingungen für einen verbesserten Strahlüberlapp gleichzeitig zu erfüllen sind.

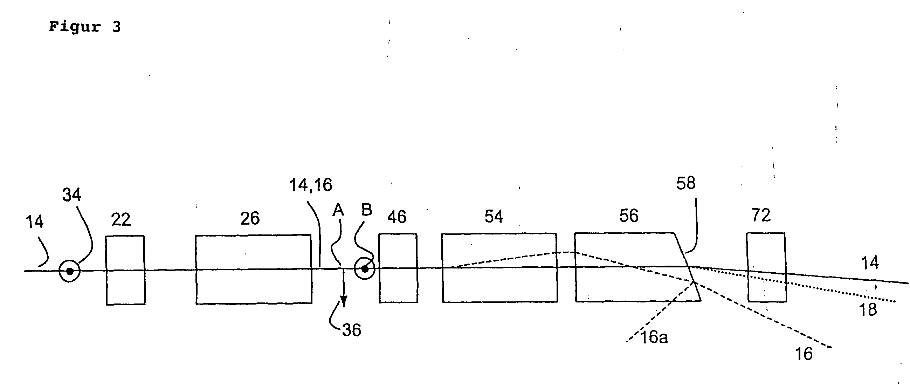

Eine weitere Ausgestaltung der Vorrichtung ist schematisch in der Figur 3 dargestellt. In allen Figuren sind funktionsgleiche oder funktionsähnliche Komponenten mit gleichen Bezugsziffern versehen, so dass auf eine wiederholte Beschreibung verzichtet werden kann.

In dieser Ausgestaltung ist die Austrittsfacette (58) des nichtlinearen Frequenzkonversionskristalls (56) so ausgelegt, dass die Strahlen (14), (16) und (18) den Kristall in unterschiedlichen Richtungen verlassen. Dann kann auf die Strahltrennungseinrichtung (74) verzichtet werden. Wenn die Austrittsfacette (58) für die Strahlung (18) im Brewsterwinkel geschnitten ist, wird die Strahlung verlustfrei aus dem Kristall austreten. Dazu ist für die Polarisation und Wellenlänge des Strahls (18) der Brewsterwinkel zu berechnen.

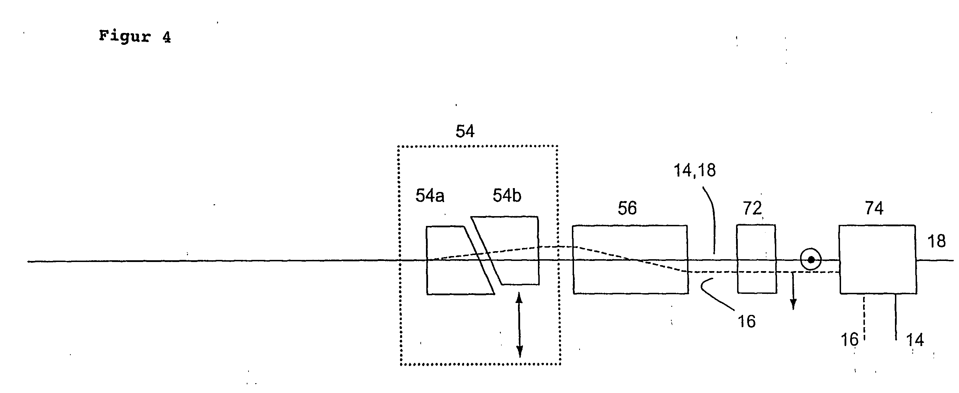

Eine erfindungsgemäße Ausgestaltung zeigt schematisch die Figur 4. In Fig. 4 sind links vom Kompensator die entsprechenden Komponenten gemäß Fig. 3 oder 2 zu ergänzen. Der Kompensator (54) ist in zwei Hälften (54a) und (54b) unterteilt. Die Austrittsseite des Teilkompensators (54a) ist unter einem Winkel zur Strahlrichtung geschnitten. Die Eintrittsseite des Teilkompensators (54b) hat den selben Schnittwinkel. Die beiden Teilkompensatoren sind so zueinander orientiert, dass sie wie ein Kompensator wirken würden, wenn die Austrittsseite von Teilkompensator (54a) und die Eintrittsseite von Teilkompensator (54b) aufeinandergesetzt würde. Wenn einer der beiden Teilkompensatoren fest im Strahlengang befestigt ist und der andere Teilkompensator in senkrechter Richtung zum Strahlengang verschoben wird, kann die zeitliche Kompensation kontinuierlich eingestellt werden, da die Laufwege für die Strahlen kontinuierlich verändert werden. Der räumliche Strahlversatz der durch den Kompensator (54) erzeugt wird, wird dadurch nicht verändert. Um den gleichen räumlichen Versatz eines einzigen Kompensators (54) mit Hilfe von zwei Teilkompensatoren (54a) und (54b) zu erhalten, ist die Brechung des Strahls (16) an der Austrittseite des Teilkompensators (54a) und der Eintrittsseite des Teilkompensators (54b) zu berücksichtigen, da durch die Brechung ein zusätzlicher räumlicher Versatz entsteht. Dieser hängt von dem Schnittwinkel der Teilkompensatoren und dem Abstand der Teilkompensatoren ab und kann leicht berechnet werden.

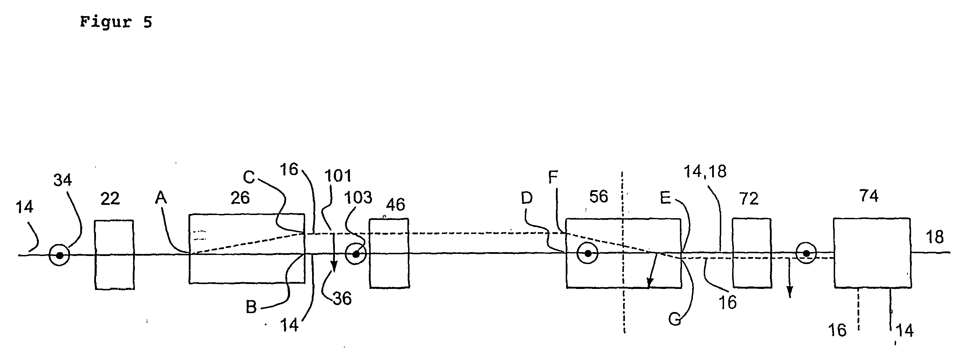

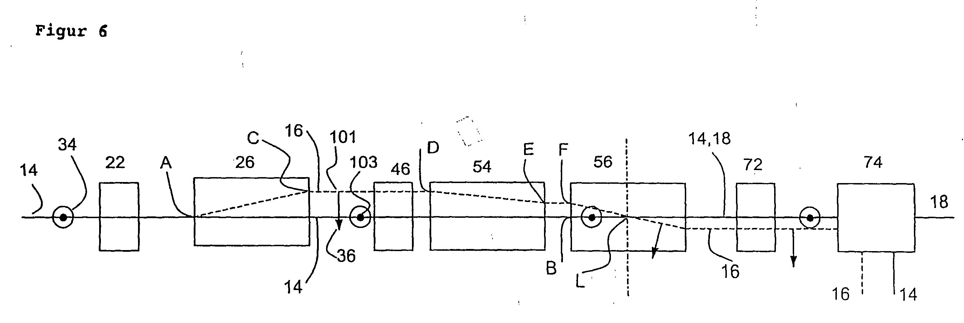

Die Figur 5 zeigt (noch ohne Kompensator) einen Fall einer Frequenzkonversion bei der bereits ein walk-off in dem ersten nichtlinearen Kristall (26) vorhanden ist. Dieser walk-off tritt zum Beispiel bei einer Frequenzkonversion mit kritischer Phasenanpassung auf. Nach Durchlaufen des Kristalls (26) sind die Strahlen um die Strecke BC getrennt. Die Impulse der Strahlen (14) und (16) sind außerdem zeitlich getrennt, da zu einer gegebenen Zeit die Impulse im Strahl (14) sich am Ort (103) befinden und die des Strahls (16) erst den Ort (101) erreicht haben. Die Strahlen treten zeitverschoben in den zweiten nichtlinearen Kristall (56) an den Orten D (Strahl (14)) und F (Strahl (16)) ein. Der walk-off im Kristall (56) führt zu einer Ablenkung des Strahls (16), so dass dieser den Kristall (56) am Ort G verlässt. Auch für diesen Fall sorgt der kompensator für die Kompensation des räumlichen und zeitlichen Versatzes der Impulse. Das ist in Fig. 6 dargestellt.

Die günstige Auswirkung des Kompensators ist nicht auf eine nach dem Kompensator erfolgende Frequenzkonversion mit Typ-II-Phasenanpassung beschränkt. Erfolgt die nachfolgende Frequenzkonversion mit Typ-I-Phasenanpassung, so kann zwischen Kompensator (54) und Frequenzkonversionskristall (56) eine Halbwellenplatte für eine der beiden in den Konversionskristall eingehenden Laserstrahlen eingefügt werden. Diese dreht die Polarisationsrichtung dieser Strahlung um 90°, die Polarisationsrichtung der anderen in den Konversionskristall eingehenden Laserstrahlung bleibt dagegen unverändert. Damit sind dann beide Laserstrahlungen im Konversionskristall (56) in gleicher Richtung polarisiert.

Wie aus der Figur 6 ersichtlich ist, ist der Kompensator in Länge und Schnittwinkel so zu gestalten, dass sich die Impulse der Strahlen (14) und (16) vorzugsweise in der Mitte des nichtlinearen Kristalls (56) zeitgleich treffen.

Die Vorteile eines beispielhaften Verfahrens und einer entsprechenden Vorrichtung zeigt das folgende Ausführungsbeispiel. Es handelt sich dabei um die Frequenzverdreifachung eines modengekoppelten Nd:YVO$_4$-Ultrakurlpulslasers.

## Ausführungsbeispiel: Frequenzverdreifachung eines modengekoppelten Nd:YVO$_4$-Lasers

Zur Erzeugung der dritten Harmonischen eines modengekoppelten Nd:YVO$_4$-Lasers mit einer Fundamentalwellenlänge von 1064 nm wird in Lithiumtriborat (LBO) die frequenzverdoppelte Strahlung mit einer Wellenlänge von 532 nm erzeugt. Die Frequenzverdopplung ist vom Typ I, d. h. dass die Polarisation der erzeugten zweiten Harmonischen senkrecht zu der Polarisation der Fundamentalwelle ist. Der LBO-Kristall hat einen x-Schnitt, d. h. dass die y- und z-Hauptachse des Kristalls senkrecht zur Strahlrichtung orientiert sind. Der LBO wird bei einer Temperatur von etwa 150° C betrieben, wodurch die Frequenzverdopplung nichtkritisch ohne einen räumlichen walk-off zwischen der Fundamentalwelle und der frequenzverdoppelten Welle ist. Beide Strahlen verlaufen im LBO-Kristall und nach Austritt aus dem LBO-Kristall kollinear. Die Gruppengeschwindigkeiten der 1064 nm-Impulse und der 532 nm-Impulse sind im LBO-Kristall wegen der Dispersion unterschiedlich. Dadurch entsteht ein zeitlicher Versatz zwischen beiden Impulsen, der mit Hilfe der bekannten Dispersionsdaten von LBO berechnet werden kann. Für die nichtkritische Frequenzverdopplung ergibt sich eine Verzögerung von 44 fs pro mm Kristalllänge. Nach dem Frequenzverdoppler, mit einer Länge des LBO-Kristalls von 15 mm, sind die Impulse um 660 fs gegeneinander zeitlich verschoben. Da die Gruppengeschwindigkeit der 1064 nm-Impulse größer als die der 532 nm-Impulse ist, ist der 532 nm-Impuls um 660 fs gegenüber dem 1064 nm-Impuls verzögert.

Zur Frequenzverdreifachung wird nach dem Frequenzverdopplerkristall ein LBO-Kristall mit kritischer Phasenanpassung verwendet: Der Kristall hat die Schnittwinkel Phi = 90° und Theta = 42,5° für eine Temperatur des Kristalls von 25° C. Die Fundamentalstrahlung und die dritte Harmonische sind für diese Kristallorientierung ordentlich polarisiert, die frequenzverdoppelte Strahlung ist außerordentlich polarisiert. Für diese kritische Phasenanpassung entsteht ein räumlicher walk-off zwischen den in den Frequenzverdreifacherkristall eingestrahlten Strahlen. Der walk-off zwischen dem 1064 nm Strahl und dem 532 nm Strahl beträgt $\rho$ = 9,3 mrad (0,53°). Die kollinear in den Verdreifacherkristall eingehenden Strahlen werden nach dem LBO-Kristall einen räumlichen Versatz von $\tan(\rho) \cdot L$ haben. Der räumliche Versatz beträgt für einen Verdreifacherkristall der Länge L = 15 mm 139 $\mu$m.

Der Gruppengeschwindigkeitsunterschied beider Impulse beträgt im LBO-Verdreifacherkristall 219 fs/mm. Für einen 15 mm langen Kristall haben die Impulse einen zeitlichen Versatz von 3,3 ps. Dabei wird der 532 nm Impuls wegen der geringeren Gruppengeschwindigkeit gegenüber dem 1064 nm Impuls verzögert. Für die Verdopplung und Verdreifachung ist eine Fokussierung in die nichtlinearen Kristalle notwendig. Der Fokus ist so gewählt, dass er sich in der Mitte des jeweiligen Kristalls befindet. Im Fokus des Verdreifacherkristalls haben die Impulse deshalb einen zeitlichen Versatz von 3,3/2 = 1,65 ps. Für die Verdreifachung ist der Überlapp der Impulse und damit die Konversionseffizienz am höchsten, wenn die Impulse im Fokus zeitgleich ankommen. Deshalb ist insgesamt eine zeitliche Kompensation zu schaffen, die der Summe des Zeitversatzes bei Durchlaufen durch den Verdopplerkristall und dem Zeitversatz bei Durchlaufen der halben Kristalllänge des Verdreifacherkristalls entspricht. Der zeitliche Versatz durch die optische Einrichtung (46) ist in diesem Ausführungsbeispiel wegen des geringen Zeitversatzes vernachlässigt. Insgesamt ist somit ein zeitlicher Versatz von 2,31 ps zu kompensieren.

Zur Kompensation des räumlichen walk-off und des zeitlichen Versatzes wird als Kompensator ein doppelbrechender BBO-Kristall vor den Verdreifacherkristall positioniert. Der BBO hat antireflexbeschichtete Oberflächen, die die Verluste für 1064 nm und 532 nm minimieren. Gemäß den Ausführungen zur Auslegung des Kompensators erhält man für den BBO-Kristall einen Schnittwinkel von 86,35°. Der Kristall muss dann eine Länge von 8 mm besitzen.

Der modengekoppelte Nd:YVO$_4$-Laser hat eine Impulslänge von 9 ps und eine mittlere Leistung von 18 W bei einer Wellenlänge von 1064 nm. Mit Einsatz des Kompensators wird eine Leistung der dritten Harmonischen von 4 W bei 355 nm erzeugt. Wenn der Kompensator nicht eingesetzt wird, beträgt die Leistung nur 1,5 W. Die Konversionseffizienz wird durch den Kompensator also mehr als verdoppelt.

Wird der Kompensator mit einem Kristallwinkel von 90° versehen und senkrecht in den Strahlengang eingebracht, so kann mit diesem Kompensator nur der zeitliche Versatz kompensiert werden, da für diese Kristallorientierung kein räumlicher walk-off im Kompensator entsteht. Wird ein derartiger Kristall als Kompensator bei der Frequenzverdreifachung verwendet, beträgt die Leistung der dritten Harmonischen 2,2 W. Sie ist wie erwartet höher als die Leistung ohne Kompensator aber niedriger als die Leistung mit dem Kompensator der sowohl den zeitlichen als auch räumlichen Versatz kompensiert.

Für die Kompensation kann nicht nur BBO verwendet werden. Beispiele für andere geeignete doppelbrechende Kristalle sind KDP, YVO$_4$, BiBO$_3$ und Quarz. Beispielsweise ergibt sich für das Ausführungsbeispiel der Frequenzverdreifachung mit einem Kompensator aus KDP ein Winkel von 86,8° und eine Länge von 23,2 mm. Die genannten Kristalle sind nicht die einzig möglichen, der Fachmann kann mit der Berechnungsvorschrift leicht die notwendigen Orientierungswinkel und die Länge des jeweiligen Kristalls auch für andere doppelbrechende Kristalle berechnen.

**Patentansprüche**

1. Vorrichtung zur optischen Frequenzkonversion von zumindest zwei Laserstrahlen (14, 16) aus ultrakurzen Strahlungsimpulsen, enthaltend zumindest ein optisch nichtlineares Medium (56), wobei

    - in dem Strahlengang vor dem optisch nichtlinearen Medium (56) ein doppelbrechender Kristall (54) angeordnet ist,
    - dessen Länge so bemessen und dessen optische Kristallachse zur Ausbreitungsrichtung der Laserstrahlen (14, 16) derart eingestellt ist,
    - dass die Orte, die Zeitpunkte und die Richtungen des Auftreffens der Strahlungsimpulse (14, 16) auf das optisch nichtlineare Medium (56) durch den doppelbrechenden Kristall (54) derart geändert werden, dass die Strahlungsimpulse sich räumlich und zeitlich im Wesentlichen an demselben Ort in dem optisch nichtlinearen Medium (56) treffen,

    **dadurch gekennzeichnet, dass**

    - der doppelbrechende Kristall (54) doppelbrechende Kristallkomponenten (54a, 54b) aufweist, wobei eine erste doppelbrechende Kristallkomponente, dessen Austrittsseite unter einem Winkel zur Strahlrichtung geschnitten ist, und eine zweite Kristallkomponente aufweist, deren Eintrittsseite denselben Schnittwinkel aufweist, und
- eine (54b) der Kristallkomponenten in Bezug auf die andere senkrecht zu dem Strahlengang verschiebbar ist, um die Durchlaufzeiten der Laserstrahlen (14, 16) durch den doppelbrechenden Kristall (54) kontinuierlich einzustellen.

**2.** Vorrichtung nach Anspruch 1,
**dadurch gekennzeichnet, dass**

- in dem Strahlengang vor dem doppelbrechenden Kristall (54) ein optisch nichtlinearer Kristall (26) angeordnet ist, in welchem aus einem ersten (14) der zumindest zwei Laserstrahlen (14, 16) ein zweiter (16) der zumindest zwei Laserstrahlen (14, 16) als zweite Harmonische des ersten Laserstrahls (14) erzeugt wird.

**3.** Vorrichtung nach Anspruch 1 oder 2,
**dadurch gekennzeichnet, dass**

- der doppelbrechende Kristall (54) aus BBO, KDP, KD*P, $YVO_4$, Quarz, LBO oder $BiBO_3$ besteht.

**4.** Vorrichtung nach einem der Ansprüche 1 bis 3,
**dadurch gekennzeichnet, dass**

- in dem nichtlinearen Kristall (56) aus den zumindest zwei Laserstrahlen (14, 16) ein dritter Laserstrahl (18) erzeugt wird und die Austrittsfacette des optisch nichtlinearen Kristalls (56) zur Erzeugung der Summen- oder Differenzfrequenz nicht senkrecht zur Ausbreitungsrichtung von zumindest einem der drei Strahlen (14, 16, 18) ist.

**Claims**

**1.** Device for the optical frequency conversion of at least two laser beams (14, 16) composed of ultra-short radiation pulses, containing at least one optically non-linear medium (56), wherein

- a birefringent crystal (54) is arranged in the beam path upstream of the optically non-linear medium (56),
- the length of said crystal being dimensioned in such a way, and the optical crystal axis of said crystal being set with respect to the propagation direction of the laser beams (14, 16) in such a way,
- that the locations, the points in time and the directions of the impingement of the radiation pulses (14, 16) on the optically non-linear medium (56) are changed by the birefringent crystal (54) in such a way that the radiation pulses meet spatially and temporally substantially at the same location in the optically non-linear medium (56),

**characterized in that**

- the birefringent crystal (54) has birefringent crystal components (54a, 54b), specifically a first birefringent crystal component, the exit side of which is cut at an angle with respect to the beam direction, and a second crystal component, the entrance side of which has the same cutting angle, and
- one (54b) of the crystal components is displaceable with respect to the other perpendicular to the beam path in order to set the passage times of the laser beams (14, 16) through the birefringent crystal (54) in continuous fashion.

**2.** Device according to Claim 1,
**characterized in that**

- an optically non-linear crystal (26) is arranged in the beam path upstream of the birefringent crystal (54), in which optically non-linear crystal, from a first (14) of the at least two laser beams (14, 16), a second (16) of the at least two laser beams (14, 16) is generated as a second harmonic of the first laser beam (14).

**3.** Device according to Claim 1 or 2,
**characterized in that**

- the birefringent crystal (54) consists of BBO, KDP, KD*P, $YVO_4$, quartz, LBO or $BiBO_3$.

4. Device according to any of Claims 1 to 3,
   **characterized in that**

   - in the non-linear crystal (56), from the at least two laser beams (14, 16) a third laser beam (18) is generated and the exit facet of the optically non-linear crystal (56) for generating the summation or difference frequency is not perpendicular to the propagation direction of at least one of the three beams (14, 16, 18).


**Revendications**

1. Dispositif de conversion de fréquence optique d'au moins deux faisceaux (14, 16) laser composés d'impulsions de rayonnement ultracourtes, comportant au moins un milieu (56) non linéaire du point de vue optique, dans lequel

   - il est disposé dans le trajet du faisceau, avant le milieu (56) non linéaire du point de vue optique, un cristal (54) biréfringent,
   - dont la longueur est telle et dont l'axe optique est réglé par rapport à la direction de propagation des faisceaux (14, 16) laser de telle façon,
   - que les endroits, les instants et les directions de l'incidence des impulsions (14, 16) de rayonnement sur le milieu (56) non linéaire du point de vue optique sont modifiés par le cristal (54) biréfringent, de manière à ce que les impulsions de rayonnement rencontrent dans l'espace et dans le temps sensiblement au même endroit le milieu (56) non linéaire du point de vue optique,

   **caractérisé en ce que**

   - le cristal (54) biréfringent comporte deux composants (54a, 54b) de cristal biréfringent, un premier composant de cristal biréfringent, dont la face de sortie est coupée en faisant un angle avec la direction du rayonnement, et un deuxième composant de cristal, dont la face d'entrée a le même angle de coupe, et
   - l'un (54b) des composants de cristal est décalé par rapport à l'autre perpendiculairement au trajet du faisceau pour régler en continu les temps de traversée du cristal (54) biréfringent par les faisceaux (14, 16) laser.

2. Dispositif suivant la revendication 1,
   **caractérisé en ce que**

   - dans le trajet du faisceau, est disposé avant le cristal (54) biréfringent un cristal (26) non linéaire du point de vue optique, dans lequel il est produit, à partir d'un premier (14) des au moins deux faisceaux (14, 16) laser, un deuxième (16) des au moins deux faisceaux (14, 16) laser en tant que deuxième harmonique du premier faisceau (14) laser.

3. Dispositif suivant la revendication 1 ou 2,
   **caractérisé en ce que**

   - le cristal (54) biréfringent est en BBO, KDP, KD*P, $YVO_4$, quartz, LBO ou $BiBO_3$.

4. Dispositif suivant l'une des revendications 1 à 3,
   **caractérisé en ce que**

   - dans le cristal (56) non linéaire, il est produit, à partir des au moins deux faisceaux (14, 16) laser, un troisième faisceau (18) laser et la facette de sortie du cristal (56) non linéaire du point de vue optique n'est pas, pour la production de la fréquence somme ou de la fréquence différence, perpendiculaire à la direction de propagation d'au moins l'un des trois faisceaux (14, 16, 18).

EP 1 430 359 B1

Figur 1

Figur 2

EP 1 430 359 B1

**Figur 3**

EP 1 430 359 B1

**Figur 4**

**Figur 5**

**Figur 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5047668 A
- EP 0503875 A2
- US 5835513 A
- US 5848079 A
- US 5852620 A
- EP 0919852 A

**In der Beschreibung aufgeführte Nicht-Patentliteratur**

- **A. V. SMITH et al.** Increased Acceptance Bandwidths in Optical Frequency Conversion by Use of Multiple walk-offcompensating non-linear Crystals. *J. Opt. Soc. Am. B,* 1998, vol. 15, 122-141